# EUROPEAN PATENT APPLICATION

(11) **EP 4 383 627 A1**
(43) Date of publication of application: **12.06.2024**
(21) Application number: 22852239.7
(22) Date of filing: 03.08.2022
(51) Int. Cl.: H04L 5/00

(54) **BEAM INDICATION METHOD AND APPARATUS, AND TERMINAL AND BASE STATION**

(30) Priority: 06.08.2021 CN 202110904310
(71) Applicant: Datang Mobile Communications Equipment Co., Ltd., Beijing 100085 (CN)
(72) Inventor: LI, Hui, Beijing 100085 (CN); GAO, Qiubin, Beijing 100085 (CN); CHEN, Runhua, Beijing 100085 (CN); LUO, Yajuan, Beijing 100085 (CN)
(74) Representative: Studio Torta S.p.A.
(86) International application number: PCT/CN2022/109979
(87) International publication number: WO 2023/011527

(57) **Abstract**

A beam indication method, a beam indication apparatus, a terminal and a base station are provided. The method includes: receiving a first configuration of each candidate reference carrier in a carrier list, where the first configuration includes a transmission configuration indicator (TCI) state pool configured for each candidate reference carrier; determining a reference carrier from the candidate reference carrier; receiving a common TCI state index from a base station, where the common TCI state index is used to indicate a TCI state in a TCI state pool corresponding to the reference carrier; and determining, based on the TCI state indicated by the common TCI state index, a beam direction for channel transmission and/or reference signal transmission on each carrier in the carrier list.

## Description

### CROSS-REFERENCE TO RELATED APPLICATION

This application claims priority to Chinese Patent Application No. 202110904310.6 filed in China on August 6, 2021, the disclosure of which is incorporated by reference herein in its entirety.

### TECHNICAL FIELD

The present disclosure relates to the field of wireless technology, in particular to a beam indication method, a beam indication apparatus, a terminal and a base station.

### BACKGROUND

In the new radio (New Radio, NR) technical specifications, for physical uplink control channel (Physical Uplink Control Channel, PUCCH), a base station semi-statically configures multiple beam directions for a terminal through a higher-layer signaling of spatial relation information SpatialRelationInfo, where a media access control-control element (Media Access Control-Control Element, MAC-CE) indicates to activate one of the beams. For PUSCH, an uplink beam selected by the base station is indirectly indicated through SpatialRelationInfo of a sounding reference signal (Sounding Reference Signal, SRS) resource in a SRI field of a dynamic signaling, which is downlink control information (Downlink Control Information, DCI). For physical downlink control channel (Physical Downlink Control Channel, PDCCH), the base station configures multiple transmission configuration indicator (Transmission Configuration Indication, TCI) states (state) for each control resource set (CORESET) through a higher-layer signaling, where a MAC-CE indicates to activate one of the states. For a PDSCH channel, the base station indicates a TCI state through a TCI field in a DCI signaling, so as to indicate a beam direction for the channel.

Different channels adopts different signaling for beam indication, and each of the channels independently performs beam indication. Thus, different channels may use respective different beams for transmissions. However, an important scenario in practical applications is that a same beam direction is used by multiple channels. For example, a physical downlink control channel (Physical Downlink Control Channel, PDCCH) for resource scheduling and a physical downlink shared channel (Physical Downlink Shared Channel, PDSCH) for user data transmission adopt a same beam direction for transmission; and a physical uplink control channel (PUCCH) and a physical uplink shared channel (PUSCH) also adopt a same beam direction. In a case where beam reciprocity exists, an uplink channel and a downlink channel also adopt a same beam direction. In this case, the current independent beam indication method increases the complexity of a system and the overhead of signaling indication. To overcome the above problems, the existing protocols also introduce a method of indicating multiple channel beams through a beam indication signaling, in which a set of TCI states is activated through MAC-CE, and then a DCI is used to indicate one of the activated TCI states.

For terminals in carrier aggregation (Carrier aggregation, CA), a corresponding beam direction needs to be determined for each component carrier (Component Carrier, CC). According to the configuration method in the related technologies, each CC needs to be configured with a TCI state pool (TCI state pool). For different CCs, a TCI state configured for a corresponding CC needs to be used to determine a transmission and reception beam of the CC. Therefore, it needs to configure multiple TCI state pools, resulting in a high overhead of configuration signaling.

### SUMMARY

Embodiments of the present disclosure provide a beam indication method, a beam indication apparatus, a terminal and a base station, so as to solve a problem in the related art of a high overhead of configuration signaling caused by an activation manner of a TCI state for the terminal in carrier aggregation (CA).

An embodiment of the present disclosure provides a beam indication method, which is performed by a terminal. The method includes:
receiving a first configuration of each candidate reference carrier in a carrier list, where the first configuration includes a transmission configuration indicator (TCI) state pool configured for each candidate reference carrier;
determining a reference carrier from the candidate reference carrier;
receiving a common TCI state index from a base station, where the common TCI state index is used to indicate a TCI state in a TCI state pool corresponding to the reference carrier; and
determining, based on the TCI state indicated by the common TCI state index, a beam direction for channel transmission and/or reference signal transmission on each carrier in the carrier list.

Optionally, in the beam indication method, the determining the reference carrier from the candidate reference carrier includes:
receiving a second configuration of each carrier in the carrier list other than the candidate reference carrier, where the second configuration includes a carrier index; and
determining the reference carrier from the candidate reference carrier according to the carrier index.

Optionally, the beam indication method further includes: receiving a plurality of carrier lists indicated by a first signaling from the base station, where one of the carrier lists is configured with one reference carrier.

Optionally, in the beam indication method, the determining the reference carrier from the candidate reference carrier includes:
receiving a second signaling transmitted by the base station and used to activate a TCI state, where the second signaling carries an index indication, and determining the reference carrier from the candidate reference carrier according to the index indication; or
receiving a third signaling transmitted by the base station and used to indicate a TCI state in activated TCI states, where the third signaling carries an index indication, and determining the reference carrier from the candidate reference carrier according to the index indication.

Optionally, in the beam indication method, the determining the reference carrier from the candidate reference carrier includes:
reporting an index indication to the base station; and
determining the reference carrier from the candidate reference carrier according to the index indication.

An embodiment of the present disclosure further provides a beam indication method, which is performed by a base station. The method includes:
transmitting a first configuration of each candidate reference carrier in a corresponding carrier list to a terminal, where the first configuration includes a transmission configuration indicator (TCI) state pool configured for each candidate reference carrier;
determining a reference carrier from the candidate reference carrier;
transmitting a common TCI state index to the terminal, where the common TCI state index is used to indicate a TCI state in a TCI state pool corresponding to the reference carrier; and
determining, based on the TCI state indicated by the common TCI state index, a beam direction for channel transmission and/or reference signal transmission on each carrier in the carrier list.

Optionally, in the beam indication method, the determining the reference carrier from the candidate reference carrier includes:
transmitting, to the terminal, a second configuration of each carrier in the corresponding carrier list other than the candidate reference carrier, where the second configuration includes a carrier index; and
determining the reference carrier from the candidate reference carrier according to the carrier index.

Optionally, the beam indication method further includes: indicating, to the terminal, a plurality of carrier lists through a first signaling, where one of the carrier lists is configured with one reference carrier.

Optionally, in the beam indication method, the determining the reference carrier from the candidate reference carrier includes:
transmitting, to the terminal, a second signaling used to activate a TCI state, where the second signaling carries an index indication, and determining the reference carrier from the candidate reference carrier according to the index indication; or
transmitting, to the terminal, a third signaling used to indicate a TCI state in activated TCI states, where the third signaling carries an index indication, and determining the reference carrier from the candidate reference carrier according to the index indication.

Optionally, in the beam indication method, the determining the reference carrier from the candidate reference carrier includes:
receiving an index indication reported by the terminal; and
determining the reference carrier from the candidate reference carrier according to the index indication.

An embodiment of the present disclosure further provides a terminal, including a memory, a transceiver and a processor, where the memory is configured to store a computer program; the transceiver is configured to transmit and receive data under control of the processor; and the processor is configured to read the computer program in the memory to perform the following operations:
receiving a first configuration of each candidate reference carrier in a carrier list, where the first configuration includes a transmission configuration indicator (TCI) state pool configured for each candidate reference carrier;
determining a reference carrier from the candidate reference carrier;
receiving a common TCI state index from a base station, where the common TCI state index is used to indicate a TCI state in a TCI state pool corresponding to the reference carrier; and
determining, based on the TCI state indicated by the common TCI state index, a beam direction for channel transmission and/or reference signal transmission on each carrier in the carrier list.

Optionally, for the terminal, the processor determining the reference carrier from the candidate reference carrier includes:
receiving a second configuration of each carrier in the carrier list other than the candidate reference carrier, where the second configuration includes a carrier index; and
determining the reference carrier from the candidate reference carrier according to the carrier index.

Optionally, for the terminal, the processor is further configured to: receive a plurality of carrier lists indicated by a first signaling from the base station, where one of the carrier lists is configured with one reference carrier.

Optionally, for the terminal, the processor determining the reference carrier from the candidate reference carrier includes:
receiving a second signaling transmitted by the base station and used to activate a TCI state, where the second signaling carries an index indication, and determining the reference carrier from the candidate reference carrier according to the index indication; or
receiving a third signaling transmitted by the base station and used to indicate a TCI state in activated TCI states, where the third signaling carries an index indication, and determining the reference carrier from the candidate reference carrier according to the index indication.

Optionally, for the terminal, the processor determining the reference carrier from the candidate reference carrier includes:
reporting an index indication to the base station; and
determining the reference carrier from the candidate reference carrier according to the index indication.

An embodiment of the present disclosure further provides a base station, including a memory, a transceiver and a processor, where the memory is configured to store a computer program; the transceiver is configured to transmit and receive data under control of the processor; and the processor is configured to read the computer program in the memory to perform the following operations:
transmitting a first configuration of each candidate reference carrier in a corresponding carrier list to a terminal, where the first configuration includes a transmission configuration indicator (TCI) state pool configured for each candidate reference carrier;
determining a reference carrier from the candidate reference carrier;
transmitting a common TCI state index to the terminal, where the common TCI state index is used to indicate a TCI state in a TCI state pool corresponding to the reference carrier; and
determining, based on the TCI state indicated by the common TCI state index, a beam direction for channel transmission and/or reference signal transmission on each carrier in the carrier list.

Optionally, for the base station, the processor determining the reference carrier from the candidate reference carrier includes:
transmitting, to the terminal, a second configuration of each carrier in the corresponding carrier list other than the candidate reference carrier, where the second configuration includes a carrier index; and
determining the reference carrier from the candidate reference carrier according to the carrier index.

Optionally, for the base station, the processor is further configured to: indicate, to the terminal, a plurality of carrier lists through a first signaling, where one of the carrier lists is configured with one reference carrier.

Optionally, for the base station, the processor determining the reference carrier from the candidate reference carrier includes:
transmitting, to the terminal, a second signaling used to activate a TCI state, where the second signaling carries an index indication, and determining the reference carrier from the candidate reference carrier according to the index indication; or
transmitting, to the terminal, a third signaling used to indicate a TCI state in activated TCI states, where the third signaling carries an index indication, and determining the reference carrier from the candidate reference carrier according to the index indication.

Optionally, for the base station, the processor determining the reference carrier from the candidate reference carrier includes:
receiving an index indication reported by the terminal; and
determining the reference carrier from the candidate reference carrier according to the index indication.

An embodiment of the present disclosure further provides a beam indication apparatus, applied to a terminal, including:
a configuration receiving unit, configured to receive a first configuration of each candidate reference carrier in a carrier list, where the first configuration includes a transmission configuration indicator (TCI) state pool configured for each candidate reference carrier;
a first determining unit, configured to determine a reference carrier from the candidate reference carrier;
an index receiving unit, configured to receive a common TCI state index from a base station, where the common TCI state index is used to indicate a TCI state in a TCI state pool corresponding to the reference carrier; and
a second determining unit, configured to determine, based on the TCI state indicated by the common TCI state index, a beam direction for channel transmission and/or reference signal transmission on each carrier in the carrier list.

An embodiment of the present disclosure further provides a beam indication apparatus, applied to a base station, including:
a configuration transmitting unit, configured to transmit a first configuration of each candidate reference carrier in a corresponding carrier list to a terminal, where the first configuration includes a transmission configuration indicator (TCI) state pool configured for each candidate reference carrier;
a third determining unit, configured to determine a reference carrier from the candidate reference carrier;
an index transmitting unit, configured to transmit a common TCI state index to the terminal, where the common TCI state index is used to indicate a TCI state in a TCI state pool corresponding to the reference carrier; and
a fourth determining unit, configured to determine, based on the TCI state indicated by the common TCI state index, a beam direction for channel transmission and/or reference signal transmission on each carrier in the carrier list.

An embodiment of the present disclosure further provides a processor readable storage medium, where the processor readable storage medium stores a computer program, and the computer program is configured to cause a processor to perform the beam indication method as described in any of the above items.

The beneficial effects of the present disclosure are as follows. By using the beam indication method according to the embodiments of the present disclosure, it only needs to configure a TCI state pool for a candidate reference carrier in a carrier list. When performing beam indication, a beam direction is determined for all carriers in the carrier list based on a TCI state in the TCI state pool of one reference carrier among the candidate reference carrier, so as to perform channel transmission and/or reference signal transmission. Therefore, with the beam indication method according to the embodiments of the present disclosure, the TCI state pool is configured only for the candidate reference carrier in the carrier list, which can greatly reduce the overhead of configuration signaling, as compared with the related technology that a TCI state pool needs to be configured on each of carriers in the carrier list.

### BRIEF DESCRIPTION OF THE DRAWINGS

In order to provide a clearer illustration of the technical solution in embodiments of this application or in the related technologies, the drawings required in the description of the embodiments of this application or in the related technologies will be illustrated hereinafter briefly. Apparently, the accompanying drawings in the following description merely relate to some embodiments of this application, and based on these drawings, a person of ordinary skill in the art may obtain other drawings without creative effort.
FIG. 1 shows a structural diagram of a network system applicable to the embodiments of this application;
FIG. 2 shows a schematic flow chart of a beam indication method according to an embodiment of the present disclosure;
FIG. 3 shows a schematic flow chart of a beam indication method according to another embodiment of the present disclosure;
FIG. 4 shows a schematic structural diagram of a beam indication apparatus according to an embodiment of the present disclosure;
FIG. 5 shows a schematic structural diagram of a terminal according to an embodiment of the present disclosure;
FIG. 6 shows a schematic structural diagram of a beam indication apparatus according to another embodiment of the present disclosure; and
FIG. 7 shows a schematic structural diagram of a base station according to an embodiment of the present disclosure.

### DETAILED DESCRIPTION

In the following, technical solutions in embodiments of this application will be described in a clear and thorough manner with reference to the drawings in the embodiments of this application. Apparently, the described embodiments are merely a part of, rather than all of, the embodiments of this application. Based on the embodiments of this application, a person skilled in the art may, without creative effort, obtain other embodiments, all of which shall fall within the scope of this application.

Terms such as "first" and "second" in the specification and claims of this application are used to distinguish similar objects, but not to describe a specific sequence or order. It should be understood that data used like this may be interchanged under a proper condition, so that the embodiments of this application described here may be implemented in a sequence apart from those shown or described here. In addition, terms "comprise" and "have" and any variant thereof are intended to cover nonexclusive inclusions. For example, a process, method, system, product or equipment including a series of steps or units is not limited to those steps or units which are clearly listed, but may include other steps or units which are not clearly listed or intrinsic to the process, the method, the product or the equipment.

The term "and/or" as used in the embodiments of this application describes an association relationship of related objects and indicates that there may be three types of relationships. For example, A and/or B may represent three situations including: alone A, both A and B, and alone B. The character "/" generally indicates that related objects before and after the character are in an "or" relationship. The term "plurality of" used in the embodiments of this application refers to two or more, and other quantifiers are similar thereto.

Words such as "exemplary" or "for example" in the embodiments of this application are used to indicate as an example, illustration or explanation. Any embodiment or design scheme described as "exemplary" or "for example" in the embodiments of this application shall not be construed as being preferable or superior to other embodiments or designs. Exactly, words such as "exemplary" or "for example" as used are intended to present related concepts in a specific manner.

Embodiments of this application will be explained below in conjunction with the accompanying drawings. The beam indication method, the terminal device and the network device provided in the embodiments of this application may be applied to a wireless communications system. The wireless communications system may be a system using the 5^{th} generation (5th Generation, 5G) mobile communication technology (hereinafter referred to as 5G system), and a person of ordinary skill in the art can appreciate that the 5G NR system is only taken as an example, but not as a limitation.

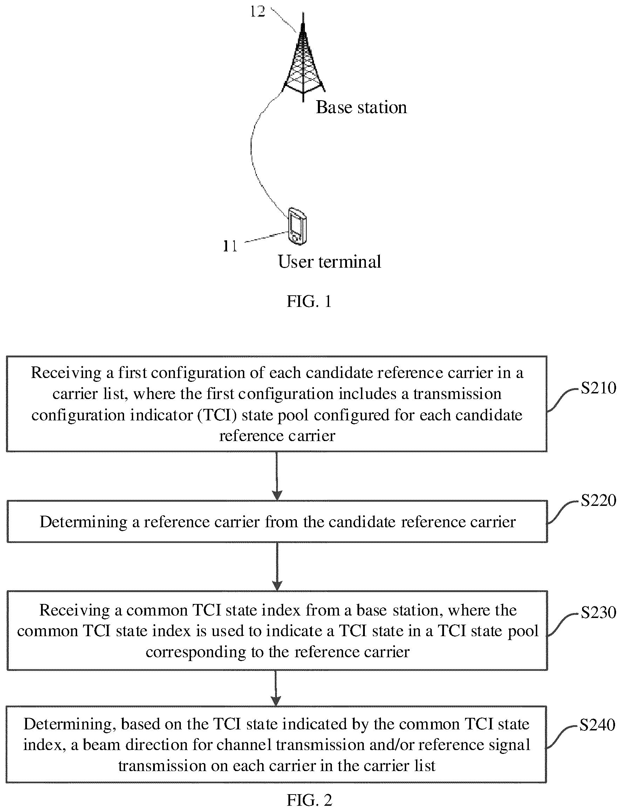

Referring to FIG. 1, FIG. 1 is a structural diagram of a network system to which the embodiments of this application are applicable. As shown in FIG. 1, the network system includes a user terminal 11 and a base station 12. The user terminal 11 may be a user equipment (User Equipment, UE), such as mobile phone, tablet personal computer (Tablet Personal Computer), laptop computer (Laptop Computer), personal digital assistant (personal digital assistant, PDA), mobile Internet device (Mobile Internet Device, MID), wearable device (Wearable Device), or other terminal-side devices. It should be noted that the specific type of user terminal 11 is not limited in the embodiments of this application. The above base station 12 may be a base station of 5G or later version (for example, gNB or 5G NR NB), or a base station in other communication systems, or may be referred to as node B. It should be noted that the 5G base station is only used as an example in the embodiments of this application, and a specific type of the base station 12 is not limited.

The embodiments of this application provide a beam indication method and a beam indication apparatus, so as to solve a problem in the related technologies of a high overhead of configuration signaling caused by an activation manner of a TCI state for the terminal in carrier aggregation (CA).

The method and the apparatus are based on the same application concept. Since principles of the method and apparatus for solving problems are similar, implementations of the method and the apparatus can refer to each other, and the repetition will not be described.

As shown in FIG. 2, an embodiment of the present disclosure provides a beam indication method, performed by a terminal. The method includes:
S210, receiving a first configuration of each candidate reference carrier in a carrier list, where the first configuration includes a transmission configuration indicator (TCI) state pool configured for each candidate reference carrier;
S220, determining a reference carrier from the candidate reference carrier;
S230, receiving a common TCI state index from a base station, where the common TCI state index is used to indicate a TCI state in a TCI state pool corresponding to the reference carri er; and
S240, determining, based on the TCI state indicated by the common TCI state index, a beam direction for channel transmission and/or reference signal transmission on each carrier in the carrier list.

By using the beam indication method in the embodiment of the present disclosure, it does not need to configure a TCI state pool for each of the carriers in a carrier list, and only needs to configure a TCI state pool for one or more candidate reference carriers in a carrier list. In beam indication, a beam direction is determined for all the carriers in the carrier list based on a TCI state in the TCI state pool of one reference carrier among the one or more candidate reference carriers, so as to perform channel transmission and/or reference signal transmission. Therefore, the TCI state pool is configured only for the one or more candidate reference carriers in the carrier list by using the beam indication method according to the embodiment of the present disclosure, which can greatly reduce the overhead of configuration signaling, as compared with the related technology that a TCI state pool needs to be configured on each of carriers in the carrier list.

In the beam indication method in the embodiment of the present disclosure, multiple carriers are recorded in the carrier list, and the one or more candidate reference carriers are part of carriers recorded in the carrier list, and the quantity of the candidate reference carriers is one or multiple. In the step S210, the first configuration of each candidate reference carrier in the carrier list received by the terminal from the base station is, for example, a PDSCH configuration transmitted through a RRC signaling, where the PDSCH configuration includes a TCI state pool configured for the candidate reference carrier. Optionally, different candidate reference carriers are configured with respective TCI state pools.

In the step S220, the reference carrier is determined from the candidate reference carrier configured with the TCI state pool, that is, to determine one of the one or more candidate reference carriers as the reference carrier. In an embodiment of the present disclosure, the manner of determining the reference carrier may be indicated by the base station through signaling, or determined and reported by the terminal. The specific implementation will be explained in detail in the following description.

In the step S230, the terminal receives the common TCI state index transmitted by the base station, where the common TCI state index is used to indicate a target TCI state. The target TCI state is one TCI state in the TCI state pools of the reference carrier determined in the step S220.

In the step S240, the beam direction is determined based on the target TCI state, where the beam direction is used for channel transmissions and/or reference signal transmissions on all the carriers in the carrier list. In the following description of the embodiments of the present disclosure, a carrier in the carrier list that is configured with a TCI state pool when receiving the first configuration is referred to as a candidate reference carrier; a carrier selected from the candidate reference carriers based on indication by the base station or determination by the terminal is referred to as a reference carrier.

In an embodiment of the present disclosure, optionally, subsequent to the step S240, the method further includes: performing, by using the determined beam direction, channel transmission and/or reference signal transmission on all carriers in the carrier list.

In the beam indication method according to the embodiment of the present disclosure, optionally, the one or more candidate reference carriers are part of the carriers recorded in the carrier list, that is, the TCI state pool may be configured for only part of the carriers in the carrier list. The reference carrier determined from the one or more candidate reference carriers is one of the one or more candidate reference carriers.

Optionally, the quantity of candidate reference carriers in the carrier list is one or at least two, which is not specifically limited.

In an embodiment of the present disclosure, optionally, all carriers that use a TCI state of a same reference carrier to determine the beam direction are grouped into a same carrier list. On this basis, all carriers configured for a terminal may be divided into different carrier lists based on different reference carriers used to determine beam directions.

In the step S210, the first configuration for each candidate reference carrier in the carrier list is received. Optionally, the first configuration is a PDSCH configuration. The base station may configure a PDSCH resource for each carrier through radio resource control (Radio Resource Control, RRC) signaling. In the embodiment of the present disclosure, for the candidate reference carriers in the carrier list, the base station configures the TCI state pool in the PDSCH configuration. Optionally, the TCI state pool includes TCI states, each of the TCI states is indicated by a corresponding TCI state pool identifier (TCI-State ID). For example, the first TCI state is indicated by TCI-StateO, the second TCI state is indicated by TCI-State 1, and so on.

Optionally, the carriers configured by the base station for the terminal may include multiple candidate reference carriers, and each of the candidate reference carriers is individually configured with a TCI state pool.

Optionally, each carrier list includes one candidate reference carrier, the candidate reference carrier is also the reference carrier that needs to be determined, and all carriers in the carrier list use a TCI state in a TCI state pool configured for the one candidate reference carrier to determine a beam direction.

Optionally, the beam indication method according to an embodiment of the present disclosure further includes:
receiving a second configuration of each carrier in the carrier list other than the candidate reference carrier, where the second configuration includes a carrier index; and
determining the reference carrier from the candidate reference carrier according to the carrier index.

The carrier index is used to indicate the reference carrier.

In an embodiment of the present disclosure, the second configuration is a PDSCH configuration. The base station configures, by using RRC signaling, a carrier index in a PDSCH resource for each of carriers other than the candidate reference carrier, which is used to indicate one of the candidate reference carriers in the carrier list. That is, the reference carrier can be determined based on the candidate reference carrier (corresponding to the above step S220), and a corresponding carrier is instructed to use a TCI state configured in the TCI state pool of the indicated candidate reference carrier to determine the beam direction.

With the beam indication method in the embodiment of the present disclosure, the carrier index configured by the base station in the PDSCH resource for carriers other than the candidate reference carrier indicates one of the candidate reference carriers, the candidate reference carrier determined according to the carrier index is the reference carrier, and it can indicate to determine, on the configured carriers, the beam direction by using the TCI state configured in the TCI state pool of the reference carrier corresponding to the carrier index.

For example, it is assumed that a carrier list contains 10 carriers, represented as CC0, CC1, ... , CC9, where CC0 is a candidate reference carrier, and CC1, ... , and CC9 are non-reference carriers. For a PDSCH configuration of CC0, the base station configures a TCI state pool, the TCI state pool includes 128 TCI states, and each of the states is indicated by a corresponding TCI State ID. For a PDSCH configuration of each CC of non-reference carriers, no TCI state pool is configured, and only one carrier index CC0 is configured (indicating that the candidate reference carrier corresponding to the carrier index CC0 is the reference carrier), and it indicates that the TCI state of the reference carrier CC0 is used for all the configured non-reference carriers.

Optionally, the beam indication method according to an embodiment of the present disclosure further includes: receiving the carrier lists indicated by the base station through a first signaling.

Optionally, one carrier list is configured with one candidate reference carrier, and thereby is configured with one reference carrier.

In this way, based on the carrier list in the first signaling, it is determined that the TCI state configured for the reference carrier is used for a channel transmission and/or a reference signal transmission on each of the carriers in the carrier list.

Optionally, the first signaling may be a higher-layer signaling, and the carrier list is configured through the higher-layer signaling. Based on the carrier list configured by the higher-layer signaling, it may be determined that a carrier in the carrier list configured with the TCI state pool is used as the candidate reference carrier (i.e., the reference carrier) for all the carriers in the carrier list, and the beam direction is determined based on the TCI state in the TCI state pool configured for the reference carrier.

With this implementation, in a case where multiple carriers are configured for a terminal, and the multiple carriers may include at least two candidate reference carriers, the carrier lists are configured through a higher-layer signaling, each carrier list is configured with one candidate reference carrier, namely, one reference carrier is configured, and it indicates that beam directions are determined for carriers in the same carrier list by using TCI states in a TCI state pool configured for the same reference carrier.

Optionally, the beam indication method according to an embodiment of the present disclosure further includes:
receiving a second signaling transmitted by the base station and used to activate a TCI state, where the second signaling carries an index indication for indicating the reference carrier, and determining the reference carrier from the candidate reference carrier according to the index indication (corresponding to the step S220 in the embodiments of the present disclosure); or
receiving a third signaling transmitted by the base station and used to indicate a TCI state in activated TCI states, where the third signaling carries an index indication for indicating the reference carrier, and determining the reference carrier from the candidate reference carrier according to the index indication (corresponding to the step S220 in the embodiments of the present disclosure).

Specifically, according to the index indications carried in the second signaling and the third signaling, it is able to determine a TCI state of a candidate reference carrier indicated by the index indications, and further determine a beam direction.

Specifically, in the case where the second signaling transmitted by the base station and used to activate the TCI state is received, and the second signaling carries the index indication of the candidate reference carrier, the reference carrier is determined based on a corresponding candidate reference carrier indicated by the index indication, and TCI states corresponding to all carriers in the carrier list are determined based on TCI states in the TCI state pool configured based on the reference carrier.

Alternatively, in the case where the third signaling transmitted by the base station and used to indicate the TCI state in the activated TCI states is received, and the third signaling carries the index indication of the candidate reference carrier, the reference carrier is determined based on a corresponding candidate reference carrier indicated by the index indication, and TCI states corresponding to all carriers in the carrier list are determined based on TCI states in the TCI state pool configured based on the reference carrier.

Optionally, in an embodiment of the present disclosure, the second signaling includes, but is not limited to, media access control - control element (Media Access Control - Control Element, MAC-CE) signaling, and the second signaling is used for beam indication, and for activating some of TCI states in the TCI state pool of the reference carrier. The third signaling includes, but is not limited to, DCI signaling, and the DCI signaling is used to indicate one TCI state in the activated TCI state. Based on this TCI state, the beam direction can be determined.

For the beam indication method according to the embodiments of the present disclosure, the method in another implementation further includes: reporting an index indication to the base station, where the index indication is used to indicate the reference carrier among the candidate reference carrier.

In this way, the reference carrier is determined from the candidate reference carrier according to the index indication (corresponding to the step S220 in the embodiments of the present disclosure).

On basis of this implementation, in the case that there are at least two candidate reference carriers configured by the base station, the terminal may determine the reference carrier from the candidate reference carriers, and may report the index indication corresponding to the determined reference carrier to the base station; according to the index indication, the base station may determine to use the TCI state in the TCI state pool corresponding to the candidate reference carrier indicated by the index indication, to determine the beam direction.

The specific implementation process of the beam indication method according to the embodiments of the present disclosure will be described below in a detailed manner, in conjunction with specific implementations.

### First Implementation

It is assumed that a carrier list includes 10 carriers CC, represented as CC0, CC1, ... , CC9. A base station allocates a PDSCH resource for each carrier through a RRC signaling.

It is assumed that the base station determines CC0 as a candidate reference carrier. In this implementation, the receiving the first configuration of the candidate reference carrier includes: receiving a PDSCH configuration of CC0 (first configuration), where in the PDSCH configuration, the base station configures a TCI state pool, which includes 128 TCI states. Each state is indicated by a corresponding TCI-StateId. For example, the first TCI state is indicated by TCI-StateO, the second TCI state is indicated by TCI-State1, and so on. Each TCI state includes the following Quasi co-location (Quasi-Co-Location, QCL) field, as shown in the table below:

| |
|---|
| QCL field |
| Source RS |
| Type D |

The above QCL field in the TCI state is represented as: a target channel/reference signal and a source reference signal (Source RS) have a QCL relation of Type D. Type D indicates that the type of QCL is beam direction information, namely, this TCI state represents using a beam having the same direction as the source reference signal.

It is assumed that CC1, ... , and CC9 are non-reference carriers. In a PDSCH configuration of each CC, no TCI state pool is configured, and only one carrier index CC0 is configured to indicate the reference carrier (i.e., to receive a second configuration for each of the carriers in the carrier list other than the candidate reference carrier), so as to determine the reference carrier from the candidate reference carrier and indicate that the TCI state on CC0 is used for all the carriers in the carrier list.

During beam indication, the base station first transmits a MAC-CE signaling (second signaling) to the terminal to activate 8 TCI states in the TCI state pool of the reference carrier, as follows:

| Code point | To Activate TCI state |
|---|---|
| 000 | TCI-State3 |
| 001 | TCI-State9 |
| 010 | TCI-State18 |
| 011 | TCI-State25 |
| 100 | TCI-State36 |
| 101 | TCI-State7 |
| 110 | TCI-State100 |
| 111 | TCI-State88 |

Subsequently, the base station transmits a DCI signaling (third signaling) to the terminal for indicating one of the TCI states (i.e., receiving a common TCI state index from a base station, where the common TCI state index specifically includes the indicated TCI state index), such as TCI-State9. After receiving this DCI signaling, the base station and the terminal use a beam direction of a source reference signal of Type D in TCI-State9 to perform transmission and reception of an uplink and downlink channel (physical downlink control channel (Physical Downlink Control Channel, PDCCH)/physical downlink shared channel (Physical Downlink Shared Channel, PDSCH)/physical uplink control channel (Physical Uplink Control Channel, PUCCH)/physical uplink shared channel (Physical Uplink Shared Channel, PUSCH)), and transmission and reception of an uplink and downlink reference signal (CSI-RS/SRS) on all the carriers. The source reference signal is a reference signal configured on the carrier CC0.

### Second Implementation

It is assumed that a carrier list contains 10 carriers, represented as CC0, CC1, ... , CC9. The base station allocates a PDSCH resource for each carrier through RRC signaling.

It is assumed that the base station determines CC0 and CC4 as candidate reference carriers. In this implementation, the receiving the first configuration of the candidate reference carrier includes: receiving a PDSCH configuration of CC0 (first configuration), where in the PDSCH configuration, a TCI state pool is configured by the base station, which includes 128 TCI states. Each state is indicated by a corresponding TCI-StateId. For example, the first TCI state is indicated by TCI-StateO, the second TCI state is indicated by TCI-State1, and so on. Each TCI state includes the following Quasi co-location (Quasi-Co-Location, QCL) field, as shown in the table below:

| |
|---|
| QCL field |
| Source RS |
| Type D |

The above QCL field in the TCI state is represented as: a target channel/reference signal and a source reference signal (Source RS) have a QCL relation of Type D. Type D indicates that the type of QCL is beam direction information, namely, this TCI state represents using a beam having the same direction as the source reference signal. Similarly, in a PDSCH configuration of the candidate reference carrier CC4, a TCI state pool is configured by the base station, which includes 128 TCI states.

In this implementation, for a PDSCH configuration of each CC of the non-reference carriers of CC1, ... , CC3 and CC5, ... , CC9, no TCI state pool is configured, and no reference carrier index is configured.

During beam indication, the base station first transmits a MAC-CE signaling (second signaling) to the terminal to activate 8 TCI states in the TCI state pool of the reference carrier, as follows:

| Code point | To Activate TCI state |
|---|---|
| 000 | TCI-State3 |
| 001 | TCI-State9 |
| 010 | TCI-State18 |
| 011 | TCI-State25 |
| 100 | TCI-State36 |
| 101 | TCI-State7 |
| 110 | TCI-State100 |
| 111 | TCI-State88 |

In this implementation, the MAC-CE signaling also indicates a reference carrier index, such as CC4, that is, a reference carrier may be determined among the candidate reference carriers based on the reference carrier index. The reference carrier index is used to indicate a carrier to which the 8 TCI states belong, that is, to determine to use the TCI state pool of CC4.

Subsequently, the base station transmits a DCI signaling (third signaling) to the terminal for indicating one of the TCI states (i.e., the terminal receives a second configuration for each carrier in the carrier list other than the candidate reference carrier), such as TCI-State9. After receiving this DCI signaling, the base station and the terminal use a beam direction of a source reference signal of Type D in TCI-State9 in the state pool of CC4 to transmit and receive, on all carriers, an uplink/downlink channel (PDCCH/PDSCH/PUCCH/PUSCH) and an uplink/downlink reference signal (channel state indication - reference signal (Channel State Indication - Reference Signal, CSI-RS)/sounding reference signal (Sounding Reference Signal, SRS)). The source reference signal is a reference signal configured on CC4.

In another implementation, in addition to using the above manner of sending a MAC-CE signaling (second signaling) to the terminal for indicating the reference carrier index, a manner of reporting the index indication (including the index of the reference carrier) by the terminal may also be adopted. The reference carrier is determined by the terminal from two candidate reference carriers, and both the base station and the terminal use the reference carrier reported by the terminal in the index indication to determine TCI states of the non-reference carriers.

### Third Implementation

It is assumed that a carrier list includes 10 carriers CC, represented as CC0, CC 1, ... , CC9. A base station allocates a PDSCH resource for each carrier through RRC signaling.

It is assumed that the base station determines CC0 and CC4 as candidate reference carriers. In this implementation, the terminal receiving the first configuration of the candidate reference carrier includes: receiving a PDSCH configuration of CC0 (first configuration), where in the PDSCH configuration, a TCI state pool is configured by the base station, which includes 128 TCI states. Each state is indicated by a corresponding TCI-StateId. For example, the first TCI state is indicated by TCI-StateO, the second TCI state is indicated by TCI-State1, and so on. Each TCI state includes the following Quasi co-location (Quasi-Co-Location, QCL) field, as shown in the table below:

| |
|---|
| QCL field |
| CC3 |
| Source RS |
| Type D |

The above QCL field in the TCI state is represented as: a target channel/reference signal and a source reference signal have a QCL relation of Type D. Additionally, a reference signal CC index is configured in the TCI state for indicating a carrier (such as CC3) where the source reference signal in the TCI state is located. Type D indicates that the type of QCL is beam direction information, namely, the TCI state represents using a beam having the same direction as the source reference signal on CC3. Similarly, the receiving the first configuration of the candidate reference carrier by the terminal further includes: receiving a PDSCH configuration of CC4, where a TCI state pool is also configured in the PDSCH configuration, and includes 128 TCI states.

For the non-reference carriers of CC1, ... , CC3, and CC5, ... , CC9, neither TCI state pool nor reference carrier index are configured in a PDSCH configuration of each CC.

During beam indication, the base station first transmits a MAC-CE signaling (second signaling) to the terminal, where the MAC-CE signaling includes a reference carrier index CC0.That is, the terminal may determine the reference carrier in the candidate reference carrier based on the reference carrier index. In addition, the MAC-CE signaling is also used to activate 8 TCI states in a TCI state pool of the reference carrier CC0, as follows:

| Code point | To Activate TCI state |
|---|---|
| 000 | TCI-State3 |
| 001 | TCI-State9 |
| 010 | TCI-State18 |
| 011 | TCI-State25 |
| 100 | TCI-State36 |
| 101 | TCI-State7 |
| 110 | TCI-State100 |
| 111 | TCI-State88 |

Subsequently, the base station transmits a DCI signaling (third signaling) to the terminal to indicate one of the TCI states (i.e., the terminal receives a second configuration for each of the carriers in the carrier list other than the candidate reference carrier), such as TCI-State9. After receiving the DCI signaling, the base station and the terminal use a beam direction of a source reference signal of Type D in TCI-State9 in the state pool of CC0 to transmit and receive, on all carriers, an uplink and downlink channel (PDCCH/PDSCH/PUCCH/PUSCH) and an uplink and downlink reference signal (CSI-RS/SRS).

In another implementation, optionally, the MAC-CE signaling does not include a reference carrier index indication, and instead, the reference carrier index CC0 is indicated in a DCI signaling. That is, the terminal may determine the reference carrier according to the carrier index indicated in the DCI signaling, and a specific implementation thereof will not be explained in detail herein.

In another implementation, optionally, the MAC-CE signaling does not include a reference carrier index indication. Since each of the above TCI states contains a reference signal CC index, a reference carrier may be determined according to the reference signal CC index. For example, according to a TCI state below where the reference signal CC index is CC3, it is determined that the reference carrier is also CC3.

| |
|---|
| QCL |
| CC3 |
| Source RS |
| Type D |

### Fourth Implementation

It is assumed that a carrier list includes 10 carriers CC, represented as CC0, CC1, ... , CC9. A base station allocates a PDSCH resource for each carrier through RRC signaling.

CC0 is set as a candidate reference carrier. In this implementation, the terminal receiving the first configuration of the candidate reference carrier includes: receiving a PDSCH configuration of CC0 (first configuration), where in the PDSCH configuration, a TCI state pool is configured by the base station, which includes 128 TCI states. Each state is indicated by a corresponding TCI-StateId. For example, the first TCI state is indicated by TCI-StateO, the second TCI state is indicated by TCI-State1, and so on. Each TCI state includes the following QCL field, as shown in the table below:

| |
|---|
| QCL field |
| Source RS |
| Type D |

The above QCL field in the TCI state is represented as: a target channel/reference signal and a source reference signal have a QCL relation of Type D. Type D indicates that the type of QCL is beam direction information, namely, this TCI state represents using a beam having the same direction as the source reference signal.

Similarly, CC8 may also be set as a candidate reference beam, and the receiving the first configuration of the candidate reference carrier by the terminal further includes: receiving a PDSCH configuration of CC8, where a TCI state pool is also configured by the base station in the PDSCH configuration, and includes 128 TCI states. The remaining 8 CCs are not configured with any TCI state pool or any reference CC index.

Furthermore, the base station configures CC list 1 through a higher-layer signaling 1 (first signaling), which includes {CC0, CC1, CC2, CC3, CC4}. The base station configures CC list 2 through a higher-layer signaling 2 (first signaling), which includes {CC5, CC6, CC7, CC8, CC9}. It is predefined in the system that each CC in the list uses a CC (candidate reference carrier) configured with a TCI state pool as a reference carrier CC. In this way, a TCI state of CC0 is used by each of CC1, CC2, CC3 and CC4; and a TCI state of CC8 is used by each of CC5, CC6, CC7 and CC9.

During beam indication, the base station first transmits a MAC-CE signaling (second signaling) to the terminal, to activate 8 TCI states in the TCI state pool of the reference carrier, as follows:

| Code point | To Activate TCI state |
|---|---|
| 000 | TCI-State3 |
| 001 | TCI-State9 |
| 010 | TCI-State18 |
| 011 | TCI-State25 |
| 100 | TCI-State36 |
| 101 | TCI-State7 |
| 110 | TCI-State100 |
| 111 | TCI-State88 |

Subsequently, the base station transmits a DCI signaling (third signaling) to the terminal, to indicate one of the TCI states (i.e., the terminal receives a second configuration for each carrier in the carrier list other than the candidate reference carrier), such as TCI-State9. After receiving the DCI signaling, the base station and the terminal transmit and receive an uplink and downlink channel (PDCCH/PDSCH/PUCCH/PUSCH) and an uplink and downlink reference signal (CSI-RS/SRS) on {CC0, CC1, CC2, CC3, CC4}, by using a beam direction of a source reference signal of Type D in TCI-State9 on CC0, where the source reference signal is a reference signal configured on CC0. Simultaneously, the base station and the terminal transmit and receive an uplink and downlink channel (PDCCH/PDSCH/PUCCH/PUSCH) and an uplink and downlink reference signal (CSI-RS/SRS) on {CC5, CC6, CC7, CC8, CC9}, by using a beam direction of a source reference signal of Type D in TCI-State9 on CC8, where the source reference signal is a reference signal configured on CC8. Based on the above implementation, different carrier lists are configured through higher-layer signaling, each of the carrier lists includes one candidate reference carrier, and all carriers in the carrier list use a TCI state of a reference carrier to determine beam directions.

In addition to the above implementation, in another implementation, optionally, the carrier list includes at least two candidate reference carriers. When performing beam indication, the base station first transmits a MAC-CE signaling to the terminal, for activating 8 TCI states in the TCI state pool of the reference carrier. At the same time, the MAC-CE signaling carries a reference CC index (indicating the reference carrier) such as CC8, which means that the terminal can determine the reference carrier based on the reference carrier index. Subsequently, the base station transmits a DCI signaling to the terminal, for indicating one of the TCI states, such as TCI-State9. After receiving the DCI signaling, the base station and the terminal transmit and receive an uplink and downlink channel (PDCCH/PDSCH/PUCCH/PUSCH) and an uplink and downlink reference signal (CSI-RS/SRS) on all carriers, by using a beam direction of a source reference signal of Type D in TCI-State9 on CC8, where the source reference signal is a reference signal configured on CC8.

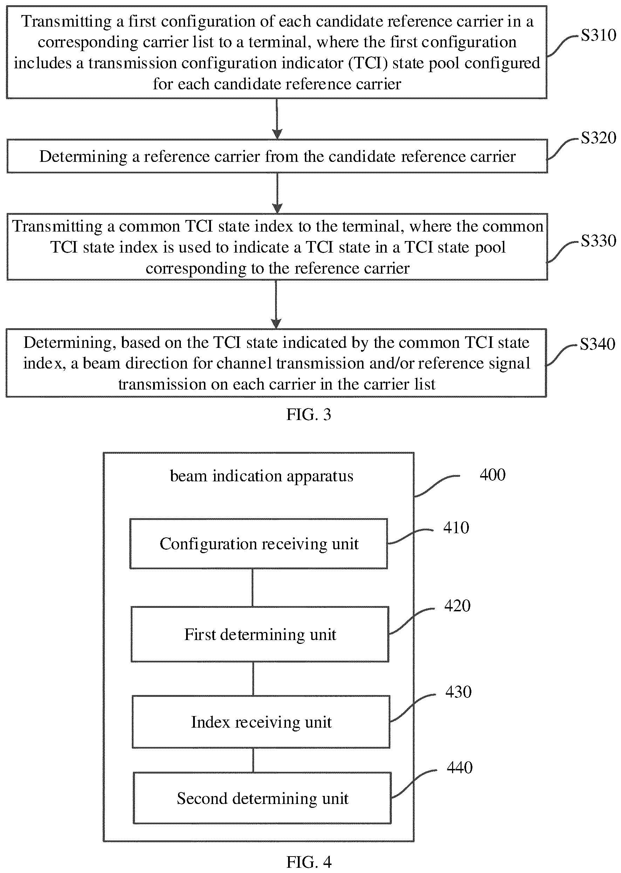

Another embodiment of the present disclosure further provides a beam indication method, which is performed by a base station, as shown in FIG. 3. The method includes:
S310, transmitting a first configuration of each candidate reference carrier in a corresponding carrier list to a terminal, where the first configuration includes a transmission configuration indicator (TCI) state pool configured for each candidate reference carrier;
S320, determining a reference carrier from the candidate reference carrier;
S330, transmitting a common TCI state index to the terminal, where the common TCI state index is used to indicate a TCI state in a TCI state pool corresponding to the reference carrier; and
S340, determining, based on the TCI state indicated by the common TCI state index, a beam direction for channel transmission and/or reference signal transmission on each carrier in the carrier list.

By using the beam indication method according to the embodiments of the present disclosure, it does not need to configure a TCI state pool for each of the carriers in a carrier list, and only needs to configure a TCI state pool for a candidate reference carrier in a carrier list. When performing beam indication, all carriers in the carrier list determine a beam direction based on a TCI state in the TCI state pool of one reference carrier among the one or more candidate reference carriers, so as to perform channel transmission and/or reference signal transmission. Therefore, with the beam indication method according to the embodiments of the present disclosure, the TCI state pool is configured only for the candidate reference carrier in the carrier list, which can greatly reduce the overhead of configuration signaling, as compared with the related technology that a TCI state pool needs to be configured on each of carriers in the carrier list.

In an embodiment of the present disclosure, optionally, subsequent to the step S340, the method further includes: performing channel transmission and/or reference signal transmission on all carriers in the carrier list by using the determined beam direction.

In the beam indication method according to the embodiment of the present disclosure, optionally, the one or more candidate reference carriers are part of the carriers recorded in the carrier list, that is, the TCI state pool may be configured for only part of the carriers in the carrier list. The reference carrier determined from the one or more candidate reference carriers are one of the one or more candidate reference carriers.

Optionally, in step S320, the determining the reference carrier from the candidate reference carrier includes:
transmitting, to the terminal, a second configuration of each of the carriers in the corresponding carrier list other than the candidate reference carrier, where the second configuration includes a carrier index; and
determining the reference carrier from the candidate reference carrier according to the carrier index.

The carrier index is used to indicate the reference carrier.

In an embodiment of the present disclosure, optionally, the second configuration is a PDSCH configuration. The base station configures, by using RRC signaling, a carrier index in a PDSCH resource for each of carriers other than the candidate reference carrier, where the carrier index is used to indicate the reference carrier in the carrier list, and instruct a corresponding carrier to use a TCI state configured in the TCI state pool of the indicated reference carrier to determine the beam direction.

Optionally, the method further includes: indicating, to the terminal, a plurality of carrier lists through a first signaling, where each of the carrier lists is configured with one reference carrier.

In this way, based on the carrier list in the first signaling, it is determined that the TCI state configured for the reference carrier is used for a channel transmission and/or a reference signal transmission on each of the carriers in the carrier list.

With this implementation, in a case where multiple carriers are configured for a terminal, and the multiple carriers may include at least two candidate reference carriers, the carrier lists are configured through a higher-layer signaling, each carrier list is configured with one candidate reference carrier, namely, one reference carrier is configured, and it indicates that beam directions are determined for carriers in the same carrier list by using TCI states in a TCI state pool configured for the same reference carrier.

Optionally, in the step S320, the determining the reference carrier from the candidate reference carrier includes:
transmitting, to the terminal, a second signaling used to activate a TCI state, where the second signaling carries an index indication, and determining the reference carrier from the candidate reference carrier according to the index indication; or
transmitting, to the terminal, a third signaling used to indicate a TCI state in activated TCI states, where the third signaling carries an index indication, and determining the reference carrier from the candidate reference carrier according to the index indication.

Specifically, the index indications carried in the second signaling and the third signaling are also used to indicate determine a beam direction by using a TCI state of the reference carrier indicated by the index indications.

Optionally, in step S320, the determining the reference carrier from the candidate reference carrier includes:
receiving an index indication reported by the terminal; and
determining the reference carrier from the candidate reference carrier according to the index indication.

In this implementation, in the case that there are at least two candidate reference carriers configured by the base station, the index indication reported by the terminal to the base station may be used to indicate to determine a beam direction by using the TCI state in the TCI state pool of the candidate reference carrier corresponding to the index indication.

It should be noted that, in the beam indication method according to the embodiment of the present disclosure, the description and specific implementation process of each step when performed by the terminal is applicable to those when performed by base station side, which are not elaborated herein.

Therefore, all descriptions of the terminal in the above embodiments are applicable to the embodiment of the base station and can achieve the same technical effects.

As shown in FIG. 4, an embodiment of the present disclosure provides a beam indication apparatus. The beam indication apparatus 400 includes:
a configuration receiving unit 410, configured to receive a first configuration of each candidate reference carrier in a carrier list, where the first configuration includes a transmission configuration indicator (TCI) state pool configured for each candidate reference carrier;
a first determining unit 420, configured to determine a reference carrier from the candidate reference carrier;
an index receiving unit 430, configured to receive a common TCI state index from a base station, where the common TCI state index is used to indicate a TCI state in a TCI state pool corresponding to the reference carrier; and
a second determining unit 440, configured to determine, based on the TCI state indicated by the common TCI state index, a beam direction for channel transmission and/or reference signal transmission on each carrier in the carrier list.

Optionally, for the beam indication apparatus, the first determining unit 420 determining the reference carrier from the candidate reference carrier includes:
receiving a second configuration of each carrier in the carrier list other than the candidate reference carrier, where the second configuration includes a carrier index and
determining the reference carrier from the candidate reference carrier according to the carrier index.

Optionally, for the beam indication apparatus, the configuration receiving unit 410 is further configured to: receive a plurality of carrier lists indicated by a first signaling from the base station, where one of the carrier lists is configured with one reference carrier.

Optionally, for the beam indication apparatus, the first determining unit 420 determining the reference carrier from the candidate reference carrier includes:
receiving a second signaling transmitted by the base station and used to activate a TCI state, where the second signaling carries an index indication, and determining the reference carrier from the candidate reference carrier according to the index indication; or
receiving a third signaling transmitted by the base station and used to indicate a TCI state in activated TCI states, where the third signaling carries an index indication, and determining the reference carrier from the candidate reference carrier according to the index indication.

Optionally, for the beam indication apparatus, the first determining unit 420 determining the reference carrier from the candidate reference carrier includes:
reporting an index indication to the base station; and
determining the reference carrier from the candidate reference carrier according to the index indication.

It should be noted that embodiments of the terminal correspond to the above method embodiments at the terminal side in one-to-one manner. All implementations in the above method embodiments are applicable to the embodiments of the terminal, which can also achieve the same technical effects.

It should be noted that the division of units in the embodiments of this application is illustrative, and is only a logical function division, and there may be another division manner in actual implementation. In addition, the functional units in various embodiments of this application may be integrated into one processing unit, or each unit may exist separately physically, or two or more units may be integrated into one unit. The above-mentioned integrated units may be implemented in the form of hardware or in the form of software functional units.

If an integrated unit is implemented in the form of a software function unit and sold or used as an independent product, it can be stored in a processor-readable storage medium. Based on such an understanding, essential parts, or parts contributing to the related art, of the technical solution of this application, or all or a part of the technical solution may be implemented in a form of a software product. The computer software product is stored in a storage medium, and includes several instructions to enable a computer device (which may be a personal computer, a server, or a network device, etc.) or a processor to execute part or all of the steps of the methods described in the various embodiments of this application. The aforementioned storage medium include: universal serial bus (USB) flash drive, removable hard disk, read-only memory (Read-Only Memory, ROM), random access memory (Random Access Memory, RAM), magnetic disk, optical disc or other media that can store program codes.

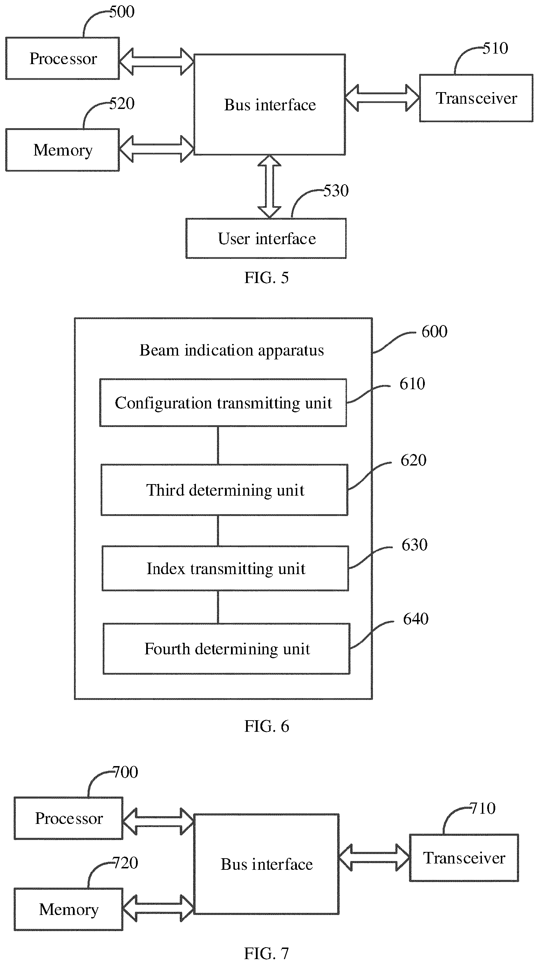

As shown in FIG. 5, an embodiment of the present disclosure further provides a terminal, which includes a processor 500, a transceiver 510, a memory 520, and a program that is stored on the memory 520 and executable on the processor 500. The transceiver 510 is connected to the processor 500 and the memory 520 through a bus interface. The transceiver 510 is configured to receive and send data under the control of the processor 500. The processor 500 is configured to read the program from the memory to perform the following processes:
receiving a first configuration of each candidate reference carrier in a carrier list, where the first configuration includes a transmission configuration indicator (TCI) state pool configured for each candidate reference carrier;
determining a reference carrier from the candidate reference carrier;
receiving a common TCI state index from a base station, where the common TCI state index is used to indicate a TCI state in a TCI state pool corresponding to the reference carrier; and
determining, based on the TCI state indicated by the common TCI state index, a beam direction for channel transmission and/or reference signal transmission on each carrier in the carrier list.

Optionally, for the terminal, the determining the reference carrier from the candidate reference carrier includes:
receiving a second configuration of each carrier in the carrier list other than the candidate reference carrier, where the second configuration includes a carrier index; and
determining the reference carrier from the candidate reference carrier according to the carrier index.

Optionally, for the terminal, the processor 500 is further configured to read the computer program to perform: receive a plurality of carrier lists indicated by a first signaling from the base station, where each of the carrier lists is configured with one reference carrier.

Optionally, for the terminal, the determining the reference carrier from the candidate reference carrier includes:
receiving a second signaling transmitted by the base station and used to activate a TCI state, where the second signaling carries an index indication, and determining the reference carrier from the candidate reference carrier according to the index indication; or
receiving a third signaling transmitted by the base station and used to indicate a TCI state in activated TCI states, where the third signaling carries an index indication, and determining the reference carrier from the candidate reference carrier according to the index indication.

Optionally, for the terminal, where the determining the reference carrier from the candidate reference carrier includes:
reporting an index indication to the base station; and
determining the reference carrier from the candidate reference carrier according to the index indication.

In FIG. 5, the bus architecture may include any number of interconnected buses and bridges. Specifically, various circuits of one or more processors represented by the processor 500 and a memory represented by the memory 520 are linked together. The bus architecture may also link various other circuits such as peripheral devices, voltage regulators, power management circuits, etc., which are well-known in the art, and therefore, no further descriptions are provided herein. The bus interface provides an interface. The transceiver 510 may be a plurality of elements, that is, include a transmitter and a receiver, and may provide a unit for communicating with various other devices on transmission media, and the transmission media include a wireless channel, a wired channel, an optical cable and other transmission media. For different user equipment, the user interface 530 may also be an interface capable of externally or internally connecting to required equipment. The connected equipment includes but not limited to a keypad, a display, a speaker, a microphone, a joystick, and the like.

The processor 500 is responsible for managing the bus architecture and general processing, and the memory 520 may store data used by the processor 400 when performing operations.

Optionally, the processor 500 may be a CPU (Central Processing Unit), ASIC (Application Specific Integrated Circuit), FPGA (Field-Programmable Gate Array), or CPLD (Complex Programmable Logic Device), and the processor may also adopt a multi-core architecture.

The processor is configured to execute any of the methods provided in the embodiments of this application according to the obtained executable instructions, by calling the computer program stored in the memory. The processor and memory may also be physically separated.

It should be noted that the above terminal provided in the embodiment of the present disclosure can achieve all method steps in the above method embodiments, and can achieve the same technical effects. Therefore, the descriptions and beneficial effects in this embedment that are the same as the method embodiments will not be specifically elaborated here.

An embodiment of the present disclosure also provides a computer-readable storage medium, on which a computer program is stored. The computer program is executed by a processor to implement steps of the beam indication method applied to the terminal. The processor readable storage medium may be any available medium or data storage device that can be accessed by the processor, including but not limited to magnetic storage (such as floppy disk, hard disk, magnetic tape, magneto-optical disk (MO)), optical storage (such as compact disc (CD), digital versatile disc (DVD), blue-ray disc (BD), high-definition versatile disc (HVD)), and semiconductor memory (such as ROM, erasable programmable ROM (EPROM), electrically erasable programmable ROM (EEPROM), non-volatile memory (NAND FLASH), solid-state drive (SSD)), etc.

As shown in FIG. 6, an embodiment of the present disclosure provides a beam indication apparatus. The beam indication apparatus 600 includes:
a configuration transmitting unit 610, configured to transmit a first configuration of each candidate reference carrier in a corresponding carrier list to a terminal, wherein the first configuration comprises a transmission configuration indicator (TCI) state pool configured for each candidate reference carrier;
a third determining unit 620, configured to determine a reference carrier from the candidate reference carrier;
an index transmitting unit 630, configured to transmit a common TCI state index to the terminal, wherein the common TCI state index is used to indicate a TCI state in a TCI state pool corresponding to the reference carrier; and
a fourth determining unit 640, configured to determine, based on the TCI state indicated by the common TCI state index, a beam direction for channel transmission and/or reference signal transmission on each carrier in the carrier list.

Optionally, for the beam indication apparatus, the third determining unit 620 determining the reference carrier from the candidate reference carrier includes:
transmitting, to the terminal, a second configuration of each carrier in the corresponding carrier list other than the candidate reference carrier, where the second configuration includes a carrier index; and
determining the reference carrier from the candidate reference carrier according to the carrier index.

Optionally, for the beam indication apparatus, the configuration sending unit 610 is further configured to indicate, to the terminal, a plurality of carrier lists through a first signaling, where each of the carrier lists is configured with one reference carrier.

Optionally, for the beam indication apparatus, the third determining unit 620 determining the reference carrier from the candidate reference carrier includes:
transmitting, to the terminal, a second signaling used to activate a TCI state, where the second signaling carries an index indication, and determining the reference carrier from the candidate reference carrier according to the index indication; or
transmitting, to the terminal, a third signaling used to indicate a TCI state in activated TCI states, where the third signaling carries an index indication, and determining the reference carrier from the candidate reference carrier according to the index indication.

Optionally, for the beam indication apparatus, the third determining unit 620 determining the reference carrier from the candidate reference carrier includes:
receiving an index indication reported by the terminal; and
determining the reference carrier from the candidate reference carrier according to the index indication.

It should be noted that embodiments of the beam indication apparatus correspond to the above method embodiments at the base station side in one-to-one manner. All implementations in the above method embodiments are applicable to the embodiments of the base station, which can also achieve the same technical effects.

It should be noted that the division of units in the embodiments of this application is illustrative, and is only a logical function division, and there may be another division manner in actual implementation. In addition, the functional units in various embodiments of this application may be integrated into one processing unit, or each unit may exist separately physically, or two or more units may be integrated into one unit. The above-mentioned integrated units may be implemented in the form of hardware or in the form of software functional units.

If an integrated unit is implemented in the form of a software function unit and sold or used as an independent product, it can be stored in a processor-readable storage medium. Based on such an understanding, essential parts, or parts contributing to the related art, of the technical solution of this application, or all or a part of the technical solution may be implemented in a form of a software product. The computer software product is stored in a storage medium, and includes several instructions to enable a computer device (which may be a personal computer, a server, or a network device, etc.) or a processor to execute part or all of the steps of the methods described in the various embodiments of this application. The aforementioned storage medium include: universal serial bus (USB) flash drive, removable hard disk, read-only memory (Read-Only Memory, ROM), random access memory (Random Access Memory, RAM), magnetic disk, optical disc or other media that can store program codes.

As shown in FIG. 7, an embodiment of the present disclosure further provides a base station, which including a processor 700, a transceiver 710, a memory 720, and a program that is stored on the memory 720 and executable by the processor 700. The transceiver 710 is connected to the processor 700 and the memory 720 through a bus interface. The transceiver 710 is configured to receive and send data under the control of processor 700. The processor 700 is configured to read the program from the memory to perform the following processes:
transmitting a first configuration of each candidate reference carrier in a corresponding carrier list to a terminal, where the first configuration includes a transmission configuration indicator (TCI) state pool configured for each candidate reference carrier;
determining a reference carrier from the candidate reference carrier;
transmitting a common TCI state index to the terminal, where the common TCI state index is used to indicate a TCI state in a TCI state pool corresponding to the reference carrier; and
determining, based on the TCI state indicated by the common TCI state index, a beam direction for channel transmission and/or reference signal transmission on each carrier in the carrier list.

Optionally, for the base station, the determining the reference carrier from the candidate reference carrier includes:
transmitting, to the terminal, a second configuration of each carrier in the corresponding carrier list other than the candidate reference carrier, where the second configuration includes a carrier index; and
determining the reference carrier from the candidate reference carrier according to the carrier index.

Optionally, for the base station, the processor 700 is further configured to read the computer program to perform following: indicate, to the terminal, a plurality of carrier lists through a first signaling, where each of the carrier lists is configured with one reference carrier.

Optionally, for the base station, the determining the reference carrier from the candidate reference carrier includes:
transmitting, to the terminal, a second signaling used to activate a TCI state, where the second signaling carries an index indication, and determining the reference carrier from the candidate reference carrier according to the index indication; or
transmitting, to the terminal, a third signaling used to indicate a TCI state in activated TCI states, where the third signaling carries an index indication, and determining the reference carrier from the candidate reference carrier according to the index indication.

Optionally, for the base station, the determining the reference carrier from the candidate reference carrier includes:
receiving an index indication reported by the terminal; and
determining the reference carrier from the candidate reference carrier according to the index indication.

In FIG. 7, the bus architecture may include any number of interconnected buses and bridges. Specifically, various circuits of one or more processors represented by the processor 700 and a memory represented by the memory 720 are linked together. The bus architecture may also link various other circuits such as peripheral devices, voltage regulators, power management circuits, etc., which are well-known in the art, and therefore, no further descriptions are provided herein. The bus interface provides an interface. The transceiver 710 may be a plurality of elements, that is, include a transmitter and a receiver, and may provide a unit for communicating with various other devices on transmission media, and the transmission media include a wireless channel, a wired channel, an optical cable and other transmission media. The processor 700 is responsible for managing the bus architecture and general processing, and the memory 720 may store data used by the processor 700 when performing operations.

The processor 700 may be a central processing unit (CPU), application specific integrated circuit (Application Specific Integrated Circuit, ASIC), field-programmable gate array (Field-Programmable Gate Array, FPGA), or complex programmable logic device (Complex Programmable Logic Device, CPLD), and the processor may also adopt a multi-core architecture.

It should be noted that the above base station provided in the embodiment of the present disclosure can achieve all method steps in the above method embodiments, and can achieve the same technical effects. Therefore, the descriptions and beneficial effects in this embedment that are the same as the method embodiments will not be specifically elaborated here.

An embodiment of the present disclosure also provides a computer-readable storage medium, on which a computer program is stored. The computer program is executed by a processor to implement steps of the beam indication method applied to the base station. The processor readable storage medium may be any available medium or data storage device that can be accessed by the processor, including but not limited to magnetic storage (such as floppy disk, hard disk, magnetic tape, magneto-optical disk (MO)), optical storage (such as CD, DVD, BD and HVD), and semiconductor memory (such as ROM, EPROM, EEPROM), non-volatile memory (NAND FLASH), solid-state drive (SSD)), etc.

Those skilled in the art should appreciate that the embodiments of this application may be provided as a method, a system, or a computer program product. Therefore, this application may take the form of complete hardware embodiments, complete software embodiments, or embodiments combining software and hardware. Moreover, this application may take the form of a computer program product implemented on one or more computer usable storage media (including but not limited to magnetic disk storage, optical storage, etc.) including a computer usable program code.

This application is described with reference to the flow chart and/or the block diagram of the method, device (system), and computer program product according to the embodiments of this application. It should be appreciated that each of processes and/or blocks in a flow chart and/or block diagram, and a combination of the processes and/or blocks in the flow chart and/or block diagram may be implemented by computer executable instructions. These computer executable instructions may be provided to a processor of a general-purpose computer, a specialized computer, an embedded processing device, or other programmable data processing devices to generate a machine, such that the instructions, which are executed via the processor of the computer or other programmable data processing device, create means for implementing the functions specified in the flow diagram flow or flows and/or block diagram block or blocks.

These processor executable instructions may also be stored in processor-readable memory that may guide computers or other programmable data processing devices to work in a specific way, causing the instructions stored in the processor readable memory to generate a manufacturing product including instruction devices that implement the functions specified in the flow diagram flow or flows and/or block diagram block or blocks.

These processor executable instructions may also be loaded onto a computer or other programmable data processing device, enabling a series of operational steps to be performed on the computer or other programmable device to generate computer-implemented processing, such that the instructions which are executed on the computer or other programmable device provide steps for implementing the functions specified in the flow diagram flow or flows and/or block diagram block or blocks.

Apparently, a person of ordinary skills in the art can make various modifications and variations to this application without departing from the spirit and scope of this application. In this way, if these modifications and variations of this application fall within the scope of the claims of this application and their equivalent technologies, this application also intends to include these modifications and variations.

It should be noted and understood that the division of the above modules is only a division of logical functions, which may be fully or partially integrated into a physical entity or physically separated in actual implementations. These modules may all be implemented in the form of software called by processing elements; or may all be implemented in the form of hardware; or, some modules may be implemented in the form of software called by processing elements, and some modules may be implemented in the form of hardware. For example, the determination module may be a separate processing element, or may be integrated into a certain chip of the above device, or, may be stored in the memory of the above device in the form of program code which is called and executed by a certain processing element of the above device to perform the functions of the determination module. Other modules have similar implementations. In addition, all or part of these modules may be integrated together, and may be implemented independently. The processing element mentioned here may be an integrated circuit with signal processing capability. In the implementation process, the various steps of the above method or the above various modules may be implemented by an integrated logic circuit in hardware form in elements of a processor or instructions in the form of software.

For example, the various modules, units, subunits or submodules may be one or more integrated circuits configured to implement the above methods, such as one or more application specific integrated circuits (Application Specific Integrated Circuit, ASIC), or one or more microprocessors (digital signal processor, DSP), or one or more field programmable gate arrays (Field Programmable Gate Array, FPGA). As another example, when a module described above is implemented in the form of program codes called by a processing element, the processing element may be a general purpose processor, such as a central processing unit (Central Processing Unit, CPU) or other processors that may call program codes. As another example, these modules may be integrated together and implemented as a system-on-a-chip (system-on-a-chip, SOC).

Terms such as "first" and "second" in the specification and the claims of the present disclosure are used for distinguishing similar objects and are not necessarily used for describing a specific order or sequence. It should be understood that the terms used in this way may be interchanged under appropriate circumstances, so that the embodiments of the present disclosure described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent in the process, method, product, or device. Moreover, the term "and/or" used in the specification and the claims indicates at least one of connected objects, for example, A and/or B and/or C means 7 situations including: A alone, B alone, C alone, both A and B, both B and C, both A and C, and all of A, B and C. Similarly, the use of "at least one of A and B" in this specification and claims should be understood as "A alone, B alone, or both A and B".

The embodiments of the present disclosure have been described above in conjunction with the accompanying drawings, but the present disclosure is not limited to the specific embodiments mentioned above. The specific embodiments mentioned above are only illustrative, but not restrictive. With the inspiration of the present disclosure, a person of ordinary skill in the art can also make many forms without departing from the principle of the present disclosure and the scope of the claims of the present disclosure, all of which shall fall within the protection of the present disclosure.

## Claims

1. A beam indication method, performed by a terminal, wherein the method comprises:
receiving a first configuration of each candidate reference carrier in a carrier list, wherein the first configuration comprises a transmission configuration indicator (TCI) state pool configured for each candidate reference carrier;
determining a reference carrier from the candidate reference carrier;
receiving a common TCI state index from a base station, wherein the common TCI state index is used to indicate a TCI state in a TCI state pool corresponding to the reference carrier; and
determining, based on the TCI state indicated by the common TCI state index, a beam direction for channel transmission and/or reference signal transmission on each carrier in the carrier list.

2. The beam indication method according to claim 1, wherein the determining the reference carrier from the candidate reference carrier comprises:
receiving a second configuration of each carrier in the carrier list other than the candidate reference carrier, wherein the second configuration comprises a carrier index used for indicating the reference carrier; and
determining the reference carrier from the candidate reference carrier according to the carrier index.

3. The beam indication method according to claim 1, further comprising:
receiving a plurality of carrier lists indicated by a first signaling from the base station, wherein one of the carrier lists is configured with one reference carrier.

4. The beam indication method according to claim 1, wherein the determining the reference carrier from the candidate reference carrier comprises:
receiving a second signaling transmitted by the base station and used to activate a TCI state, wherein the second signaling carries an index indication, and determining the reference carrier from the candidate reference carrier according to the index indication; or
receiving a third signaling transmitted by the base station and used to indicate a TCI state in activated TCI states, wherein the third signaling carries an index indication, and determining the reference carrier from the candidate reference carrier according to the index indication.

5. The beam indication method according to claim 1, wherein the determining the reference carrier from the candidate reference carrier comprises:
reporting an index indication to the base station; and
determining the reference carrier from the candidate reference carrier according to the index indication.

6. A beam indication method, performed by a base station, wherein the method comprises:
transmitting a first configuration of each candidate reference carrier in a corresponding carrier list to a terminal, wherein the first configuration comprises a transmission configuration indicator (TCI) state pool configured for each candidate reference carrier;
determining a reference carrier from the candidate reference carrier;
transmitting a common TCI state index to the terminal, wherein the common TCI state index is used to indicate a TCI state in a TCI state pool corresponding to the reference carrier; and
determining, based on the TCI state indicated by the common TCI state index, a beam direction for channel transmission and/or reference signal transmission on each carrier in the carrier list.

7. The beam indication method according to claim 6, wherein the determining the reference carrier from the candidate reference carrier comprises:
transmitting, to the terminal, a second configuration of each carrier in the corresponding carrier list other than the candidate reference carrier, wherein the second configuration comprises a carrier index used for indicating the reference carrier; and
determining the reference carrier from the candidate reference carrier according to the carrier index.

8. The beam indication method according to claim 6, further comprising:
indicating, to the terminal, a plurality of carrier lists through a first signaling, wherein one of the carrier lists is configured with one reference carrier.

9. The beam indication method according to claim 6, wherein the determining the reference carrier from the candidate reference carrier comprises:
transmitting, to the terminal, a second signaling used to activate a TCI state, wherein the second signaling carries an index indication, and determining the reference carrier from the candidate reference carrier according to the index indication; or
transmitting, to the terminal, a third signaling used to indicate a TCI state in activated TCI states, wherein the third signaling carries an index indication, and determining the reference carrier from the candidate reference carrier according to the index indication.

10. The beam indication method according to claim 6, wherein the determining the reference carrier from the candidate reference carrier comprises:
receiving an index indication reported by the terminal; and
determining the reference carrier from the candidate reference carrier according to the index indication.

11. A terminal, comprising a memory, a transceiver and a processor, wherein the memory is configured to store a computer program; the transceiver is configured to transmit and receive data under control of the processor; and the processor is configured to read the computer program in the memory to perform the following operations:
receiving a first configuration of each candidate reference carrier in a carrier list, wherein the first configuration comprises a transmission configuration indicator (TCI) state pool configured for each candidate reference carrier;
determining a reference carrier from the candidate reference carrier;
receiving a common TCI state index from a base station, wherein the common TCI state index is used to indicate a TCI state in a TCI state pool corresponding to the reference carrier; and
determining, based on the TCI state indicated by the common TCI state index, a beam direction for channel transmission and/or reference signal transmission on each carrier in the carrier list.

12. The terminal according to claim 11, wherein the determining the reference carrier from the candidate reference carrier comprises:
receiving a second configuration of each carrier in the carrier list other than the candidate reference carrier, wherein the second configuration comprises a carrier index used for indicating the reference carrier; and
determining the reference carrier from the candidate reference carrier according to the carrier index.

13. The terminal according to claim 11, wherein the processor is further configured to read the computer program to perform following:
receiving a plurality of carrier lists indicated by a first signaling from the base station, wherein one of the carrier lists is configured with one reference carrier.

14. The terminal according to claim 11, wherein the determining the reference carrier from the candidate reference carrier comprises:
receiving a second signaling transmitted by the base station and used to activate a TCI state, wherein the second signaling carries an index indication, and determining the reference carrier from the candidate reference carrier according to the index indication; or
receiving a third signaling transmitted by the base station and used to indicate a TCI state in activated TCI states, wherein the third signaling carries an index indication, and determining the reference carrier from the candidate reference carrier according to the index indication.

15. The terminal according to claim 11, wherein the determining the reference carrier from the candidate reference carrier comprises:
reporting an index indication to the base station; and
determining the reference carrier from the candidate reference carrier according to the index indication.

16. A base station, comprising a memory, a transceiver and a processor, wherein the memory is configured to store a computer program; the transceiver is configured to transmit and receive data under control of the processor; and the processor is configured to read the computer program in the memory to perform the following operations:
transmitting a first configuration of each candidate reference carrier in a corresponding carrier list to a terminal, wherein the first configuration comprises a transmission configuration indicator (TCI) state pool configured for each candidate reference carrier;
determining a reference carrier from the candidate reference carrier;
transmitting a common TCI state index to the terminal, wherein the common TCI state index is used to indicate a TCI state in a TCI state pool corresponding to the reference carrier; and
determining, based on the TCI state indicated by the common TCI state index, a beam direction for channel transmission and/or reference signal transmission on each carrier in the carrier list.

17. The base station according to claim 16, wherein the determining the reference carrier from the candidate reference carrier comprises:
transmitting, to the terminal, a second configuration of each carrier in the corresponding carrier list other than the candidate reference carrier, wherein the second configuration comprises a carrier index used for indicating the reference carrier; and
determining the reference carrier from the candidate reference carrier according to the carrier index.

18. The base station according to claim 16, wherein the processor is further configured to read the computer program to perform following:
indicating, to the terminal, a plurality of carrier lists through a first signaling, wherein one of the carrier lists is configured with one reference carrier.

19. The base station according to claim 16, wherein the determining the reference carrier from the candidate reference carrier comprises:
transmitting, to the terminal, a second signaling used to activate a TCI state, wherein the second signaling carries an index indication, and determining the reference carrier from the candidate reference carrier according to the index indication; or
transmitting, to the terminal, a third signaling used to indicate a TCI state in activated TCI states, wherein the third signaling carries an index indication, and determining the reference carrier from the candidate reference carrier according to the index indication.

20. The base station according to claim 16, wherein the determining the reference carrier from the candidate reference carrier comprises:
receiving an index indication reported by the terminal; and
determining the reference carrier from the candidate reference carrier according to the index indication.

21. A beam indication apparatus, applied to a terminal, wherein the apparatus comprises:
a configuration receiving unit, configured to receive a first configuration of each candidate reference carrier in a carrier list, wherein the first configuration comprises a transmission configuration indicator (TCI) state pool configured for each candidate reference carrier;
a first determining unit, configured to determine a reference carrier from the candidate reference carrier;
an index receiving unit, configured to receive a common TCI state index from a base station, wherein the common TCI state index is used to indicate a TCI state in a TCI state pool corresponding to the reference carrier; and
a second determining unit, configured to determine, based on the TCI state indicated by the common TCI state index, a beam direction for channel transmission and/or reference signal transmission on each carrier in the carrier list.

22. A beam indication apparatus, applied to a base station, wherein the apparatus comprises:
a configuration transmitting unit, configured to transmit a first configuration of each candidate reference carrier in a corresponding carrier list to a terminal, wherein the first configuration comprises a transmission configuration indicator (TCI) state pool configured for each candidate reference carrier;
a third determining unit, configured to determine a reference carrier from the candidate reference carrier;
an index transmitting unit, configured to transmit a common TCI state index to the terminal, wherein the common TCI state index is used to indicate a TCI state in a TCI state pool corresponding to the reference carrier; and
a fourth determining unit, configured to determine, based on the TCI state indicated by the common TCI state index, a beam direction for channel transmission and/or reference signal transmission on each carrier in the carrier list.

23. A processor readable storage medium, wherein the processor readable storage medium stores a computer program, and the computer program is configured to cause a processor to perform the beam indication method according to any one of claims 1 to 5; or, configured to cause a processor to perform the beam indication method according to any one of claims 6 to 10.
